# EUROPEAN PATENT APPLICATION

(11) **EP 1 239 260 A2**
(43) Date of publication of application: **11.09.2002**
(21) Application number: 02005424.3
(22) Date of filing: 08.03.2002
(51) Int. Cl.: G01B 11/06

(54) **Film thickness measuring apparatus**

(30) Priority: 09.03.2001 JP 2001067320
(71) Applicant: HORIBA, LTD., Kyoto (JP)
(72) Inventor: Yoshizawa, Tomoya, Utsunomiya-City, Tochigi-Prefecture (JP); Otsuki, Kunio, Kisshoin, Minami-ku, Kyoto (JP)
(74) Representative: Müller - Hoffmann & Partner

(57) **Abstract**

The present invention provides a film thickness measuring apparatus capable of restricting the area to be measured on the surface of the sample as required without taking the trouble to reduce the incident beam diameter.

The present invention provides a film thickness measuring apparatus comprising an incident optical system for irradiating a surface of a sample with polarized light, and a detective optical system for outputting data with respect to the surface of the sample based on an amount of polarization state change of elliptically polarized light reflected on the surface of the sample, said apparatus being characterized by a pinhole section for restricting a light-receptive intake area which is placed between an analyzer in the detective optical system and a spectrometer.

## Description

The present invention relates to a film thickness measuring apparatus for measuring the thickness of a thin film on the surfaces of a semiconductor wafer, a reticle/mask, a glass substrate of a liquid crystal display (LCD) and the like.

There is a spectroscopic ellipsometer as one of film thickness measuring apparates described above. This spectroscopic ellipsometer observes the polarization state change when light reflects on the surface of a substance to measure optical constants (refractive index, extinction coefficient) of the substance, and when a thin film layer exists on the surface of the substance, it measures the film thickness and the optical constants.

By the way, in recent years, it has been required in measuring the film thickness of a sample such as a wafer that an area of the wafer to be measured is restricted to the area being infinitesimal as far as possible by reducing a diameter of an incident light (hereinafter, referred to as an incident beam diameter). To correspond to such a requirement, it is considered that a slit is provided between a light source and a polarizer and the incident beam diameter upon the sample is reduced to be infinitesimal as far as possible.

However, when a light of many-wavelengths is used as an irradiating light, chromatic aberration sometimes arises in using a lens for a beam-reducing optical system or using a polarizer as a polarizing element, and therefore it was not possible to reduce the incident beam diameter to an infinitesimal diameter in contrast to the case of using single wavelength. Particularly, in using the irradiating light whose wavelength ranges from a short wavelength of 190 nm to a long wavelength of 830 nm, the foregoing reduction of the incident beam diameter involves considerable difficulty. Incidentally, the foregoing chromatic aberration means the difference of refractive index depending on the wavelengths, i.e., aberration (defect produced when an imaging optical system does not satisfy the condition of Gaussian imaging) caused by the dispersion of rays of light.

And, even though the incident beam diameter is reduced as described above, there was an disadvantage that a light was also developed around the incident beam reduced actually and the developed light was taken into a detective optical system as-is.

The present invention has been made in view of situations described above, and an object of the present invention is to provide the film thickness measuring apparatus capable of restricting the area to be measured on the surface of the sample as required without taking the trouble to reduce the incident beam diameter.

To achieve the above-mentioned object, the present invention provides a film thickness measuring apparatus comprising an incident optical system for irradiating a surface of a sample with polarized light, and a detective optical system for outputting data with respect to the surface of the sample based on an amount of polarization state change of elliptically polarized light reflected on the surface of the sample, said apparatus being characterized by a pinhole section for restricting a light-receptive intake area which is placed between an analyzer in the detective optical system and a spectrometer.

In the above-mentioned film thickness measuring apparatus, chromatic aberration is not produced and the incident light is not affected from surroundings, and therefore it is possible to take in only the light from the desired area of the sample.

Further features and advantages of the present invention will be explained in the following description while making reference to the accompanying drawings, wherein:
Figure 1 is a view showing schematically the overall construction of the film thickness measuring apparatus of the present invention.
Figure 2 is a view showing the construction of the essential part of the foregoing film thickness measuring apparatus with a partially enlarged view.

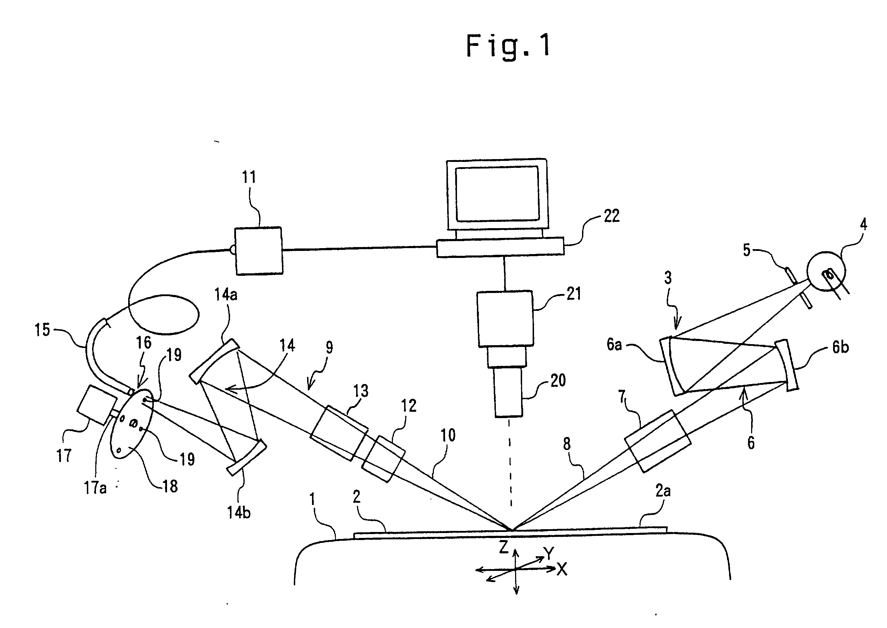

A preferred embodiment of the invention will be described in reference to the drawings. Figures 1 to 2 show one example of the present invention. Figure 1 shows schematically a construction of a spectroscopic ellipsometer as the film thickness measuring apparatus of the present invention, and in this drawing, a reference number 1 denotes a measuring stage, and constructed in such a way that a wafer 2 as a sample is sucked on it with means such as vacuum adsorption means and held in horizontal position, and moved linearly to three directions of X-direction (horizontal direction parallel to the drawing), Y-direction (perpendicular direction to the drawing) and Z-direction (vertical direction parallel to the drawing), respectively, which are orthogonal to each other, with a stage-holding mechanism (not shown).

A reference number 3 denotes an incident optical system provided on one side above the sample stage 1, and is composed of a white light source 4 consisting of a lamp such as a xenon lamp emitting the light having the wide wavelength range of, for example, from 190 nm to 830 nm, a slit 5 for reducing a light emitted from the white light source 4, a beam-reducing optical system 6 consisting of, for example, two concave mirrors 6a, 6b and a polarizer 7, and irradiates a linearly polarized light 8, which is formed by reducing a diameter of a light of many-wavelengths from the light source 4 and polarizing the light to a predetermined direction, on the surface 2a of the sample 2.

A reference number 9 denotes a detective optical system provided on the other side above the sample stage 1, and when the linearly polarized light 8 is irradiated on the surface 2a of the wafer 2, it outputs the amount of polarization state change of an elliptically polarized light 10 reflected on the above-mentioned surface 2a, for example, to a spectrometer 11, and it is provided with a phase modulation element 12, an analyzer 13, a beam-reducing optical system 14 consisting of two concave mirrors 14a, 16b, and an optical fiber 15 for taking out the signals to the spectrometer 11, and provided with a pinhole section 16 between the beam-reducing optical system 14 and the optical fiber 15.

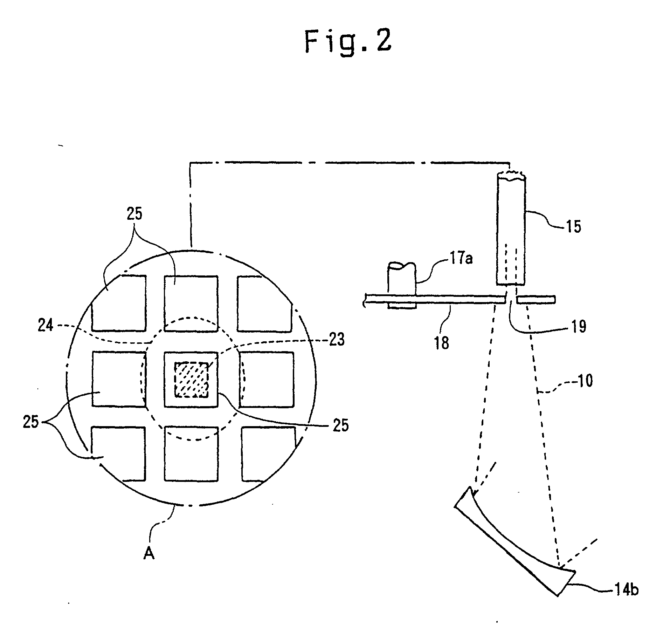

The foregoing pinhole section 16 is formed by opening a plurality of pinholes 19 having varying sizes (diameters) spaced at appropriate distances on the identical circumference of a circle of a disk 18 attached, for example, to an axis of revolution 17a of a stepping motor 17, and constructed, as shown in Figure 2, in such a way that the light exiting the beam-reducing optical system 14 enters the optical fiber 15 through the pinhole 19 only when any pinhole 19 is positioned on an optical path passing through the beam-reducing optical system 14 and optical fiber 15.

A reference number 20 denotes an optical microscope installed above the sample stage 1, and a reference number 21 denotes, for example, a CCD camera installed at the rear (upper side) of the optical microscope 20.

A reference number 22 denotes, for example, a computer having an image processing function, in which measurements from the spectrometer 11, i. e., measurements of the amount of polarization state change of the light 10 reflected on the surface 2a of the wafer and signals from the optical microscope 20 and the CCD camera 21 are inputted, and the above-mentioned measurements are appropriately arithmetically processed or subjected to image processing to measure the optical constants (refractive index, extinction coefficient) of the wafer surface 2a and the film thickness of a thin film on the sample surface 8a and the signals from the optical microscope 20 and the CCD camera 21 are arithmetically processed and subjected to image processing.

The film thickness measuring apparatus having the above-mentioned constitution is constructed in such a way that the foregoing slit 5 is taken to be relatively wide and the light-receptive intake area is restricted in place with the pinhole section 16 by providing the pinhole section 16 between the beam-reducing optical system 14 and the optical fiber 15 instead of reducing the beam emitted from the white light source 4 to the small size sufficiently with the pinhole (slit 5 in this embodiment) in this kind of conventional film thickness measuring apparatus.

By adopting the above-mentioned constitution, as shown in an enlarged portion A in Figure2, receptive light of light being unnecessary for a beam area 24 other than (around) a hatched portion 23 is cut with the pinhole 19, and it is possible to obtain an effect equivalent to the case that the incident beam diameter is reduced on the side of the slit 5, and chromatic aberration is not produced and the incident light is not affected from surroundings, and therefore it is possible to take in only the light from the desired area of the wafer 2. And, the confirmation of the foregoing area 23 can be easily made by removing the optical fiber 15 and irradiating light in place from the side of the pinhole section 16 to project the image 23 of the pinhole on the wafer 2.

And, in the above-mentioned embodiment, since a plurality of pinholes 19 of varying sizes are provided as the pinhole section 16, it is possible to restrict the sampling area on the wafer 2 to the predetermined size by selecting these pinholes appropriately to use.

Further, the pinhole section 16 may be located at any position between the analyzer 13 and the spectrometer 11.

As described above, in the present invention, by the simple and rational improvement that the pinhole section for restricting the light-receptive intake area is disposed/positioned between the analyzer and the spectrometer in the detective optical system, it is possible to restrict the area to be measured on the surface of the sample as required without taking the trouble to reduce the incident beam diameter, and it is possible to take in only the light from the desired area of the sample without producing chromatic aberration and affecting the incident light through surroundings. In accordance with the present invention, it is possible to obtain the information of polarization intended without being subjected to effects due to the size of the incident beam diameter and the material of the area to be measured of the sample.

## Claims

1. A film thickness measuring apparatus, which is provided with an incident optical system for irradiating a surface of a sample with polarized light, and a detective optical system for outputting data with respect to the surface of the sample based on an amount of polarization state change of elliptically polarized light reflected on the surface of the sample, **characterized by** a pinhole section for restricting a light-receptive intake area which is provided between an analyzer in the detective optical system and a spectrometer.

2. The film thickness measuring apparatus according to claim 1, **characterized in that** the pinhole section has a plurality of pinholes of varying sizes, wherein the pinholes are selectable on demand.
